# EUROPEAN PATENT SPECIFICATION

(11) **EP 3 090 497 B1**
(45) Date of publication and mention of the grant of the patent: **13.12.2023**
(21) Application number: 15743220.4
(22) Date of filing: 23.01.2015
(51) Int. Cl.: H04B 10/80, H04B 10/077, H04B 10/079, H04B 10/54, H04B 10/60, H04J 14/02, H04Q 11/00

(54) **SYSTEM AND METHOD FOR PILOT TONE MODULATION BY DATA BIAS**
SYSTEM UND VERFAHREN ZUR PILOTTONMODULATION DURCH DATENVORSPANNUNG
SYSTÈME ET PROCÉDÉ DE MODULATION DE TONALITÉ PILOTE PAR POLARISATION DE DONNÉES

(30) Priority: 29.01.2014 US 201414167359
(43) Date of publication of application: 09.11.2016
(73) Proprietor: Huawei Technologies Co., Ltd., Longgang District Shenzhen, Guangdong 518129 (CN)
(72) Inventor: JIANG, Zhiping, Kanata, Ontario K2W 0A5 (CA); ZHONG, Jian, Kanata, Ontario K2K 3M2 (CA)
(74) Representative: Pfenning, Meinig & Partner mbB
(86) International application number: PCT/US2015/012738
(87) International publication number: WO 2015/116501

(56) References cited:
- EP-A1- 2 639 977
- US-A1- 2004 013 428
- US-A1- 2004 101 311
- US-A1- 2006 034 616
- US-A1- 2007 280 700
- US-A1- 2013 308 943
- INAN B ET AL: "Pilot-tone-based nonlinearity compensation for optical OFDM systems", 36TH EUROPEAN CONFERENCE AND EXHIBITION ON OPTICAL COMMUNICATION : (ECOC 2010) ; TORINO, ITALY, 19 - 23 SEPTEMBER 2010, IEEE, PISCATAWAY, NJ, USA, 19 September 2010 (2010-09-19), pages 1-3, XP031789549, ISBN: 978-1-4244-8536-9
- RANDEL S ET AL: "Analysis of RF-Pilot-Based Phase Noise Compensation for Coherent Optical OFDM Systems", IEEE PHOTONICS TECHNOLOGY LETTERS, IEEE SERVICE CENTER, PISCATAWAY, NJ, US, vol. 22, no. 17, 1 September 2010 (2010-09-01), pages 1288-1290, XP011311862, ISSN: 1041-1135

## Description

### TECHNICAL FIELD

The present invention relates to the field of optical communications, and, in particular embodiments, to a system and method for pilot tone modulation by data bias.

### BACKGROUND

In optical systems such as dense wavelength division multiplexing (DWDM) systems, low frequency modulation in the form of pilot tone modulations can be applied to a channel to carry its wavelength and other identification information, which improves fiber link management and facilitates power monitoring. The low modulations are usually added internally via a data driver by modulating its driving amplitude, or externally via variable optical attenuators (VOAs). Modulations added through data drivers require additional hardware and hence cost. The driver also requires feedback control and calibration, increasing system complexity. Modulations added through external VOAs also increase cost and cause difficulty for achieving higher frequency modulation. There is a need for an efficient pilot tone modulation scheme that overcomes such issues.

Document US 2004/0013428 A1 discloses an optical transmission apparatus with function of detection status, wherein a light source generates a continuous wave light, a data signal source generates a data signal, a pilot signal is multiplexed on the data signal. The frequency of the pilot signal is much lower than that of the data signal. An LN modulator modulates the continuous wave light using the data signal on which the pilot signal is multiplexed. A data detection unit monitors whether a frequency component two times as high as the frequency of the pilot signal is contained in the output light from the LN modulator. Unless the frequency component two times as high as the frequency of the pilot signal is contained, it is determined that the data signal has stopped or disappeared, and outputs an alarm.

Document US 2004/0101311 A1 relates to the distribution of a synchronization signal in an optical communication system which is inherently asynchronous. In order to accomplish a cost-efficient mechanism for transmitting a synchronization signal in such a system, the amplitude of a payload signal is modulated with the synchronization signal, whereby an amplitude-modulated payload signal is obtained. This amplitude-modulated payload signal is transmitted as an optical signal to the opposite end of an optical link, where the synchronization signal is separated from the payload signal.

Document EP 2 639 977 A1 relates to optical communication systems. In particular, the document relates to the digital signal processing performed at coherent optical receivers in such optical communication systems. A coherent optical receiver adapted to recover a plurality of payload symbols transmitted over a transmission channel within a received optical signal is described. The received optical signal is a polarization multiplexed optical signal comprising a first component and a second component; and the received optical signal comprises a sequence of received training symbols corresponding to a sequence of transmitted training symbols. The coherent optical receiver comprises an optical-to-digital converter adapted to convert the received optical signal into a digital signal comprising two polarization components; a synchronization unit adapted to extract the sequence of received training symbols from the digital signal; a channel estimation unit adapted to determine an indication of a transfer function of the transmission channel, based on the sequence of received training symbols and based on the sequence of transmitted training symbols; and a polarization de-multiplexing unit adapted to rotate the digital signal, based on the indication of the transfer function of the transmission channel, thereby yielding a polarization de-multiplexed digital signal.

### SUMMARY OF THE INVENTION

The invention concerns a transmission method, according to independent claim 1. The invention further concerns a receiving method according to independent claim 7 and a transmitter according to claim 11 and a receiver according to claim 14. Further embodiments of the invention are found in the dependent claims.

### BRIEF DESCRIPTION OF THE DRAWINGS

For a more complete understanding of the present invention, and the advantages thereof, reference is now made to the following descriptions taken in conjunction with the accompanying drawing, in which:
Figure 1 illustrates an example of a wavelength division multiplexing (WDM) optical communications system;
Figure 2 illustrates an embodiment of a pattern design for pilot tone modulation by data bias;
Figure 3 illustrates an embodiment of a system for pilot tone modulation by data bias;
Figure 4 illustrates an embodiment of determining a sequence of bias bits corresponding to a desired pilot tone modulation;
Figure 5 illustrates an embodiment of a method for pilot tone modulation by data bias;
Figure 6 illustrates an embodiment of a method for receiving frames including bias bits for pilot tone modulation;
Figure 7 illustrates another embodiment of a method for pilot tone detection; and
Figure 8 is a diagram of a processing system that can be used to implement various embodiments.

Corresponding numerals and symbols in the different figures generally refer to corresponding parts unless otherwise indicated. The figures are drawn to clearly illustrate the relevant aspects of the embodiments and are not necessarily drawn to scale.

### DETAILED DESCRIPTION OF ILLUSTRATIVE EMBODIMENTS

The making and using of the presently preferred embodiments are discussed in detail below. It should be appreciated, however, that the present invention provides many applicable inventive concepts that can be embodied in a wide variety of specific contexts. The specific embodiments discussed are merely illustrative of specific ways to make and use the invention, and do not limit the scope of the invention.

Embodiments are provided herein for applying pilot tone modulations to optical signals, such as high baud rate signals, via data bias. The pilot tone modulations can carry the channel identification information of the optical signal and can also collect the channel information as the signal propagates down the fiber link. The pilot tone modulation scheme herein has relatively lower cost than other techniques. It may require a new chip design as a one-time investment. Since the modulation is done by modifying data, the modulation depth is accurate, and there is no need for calibration/feedback control, which can improve power monitoring accuracy and simplify implementation.

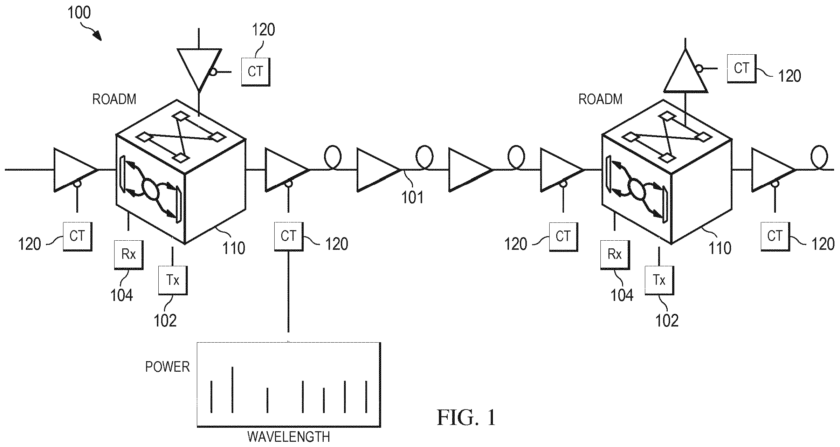

Figure 1 shows an example of a WDM, or dense WDM (DWDM), optical communications system 100. The system 100 includes reconfigurable optical add-drop multiplexers (ROADMs) 110 connected to each other via optical fiber links 101. The ROADMs 110 are coupled (e.g., via fibers) to transmitters 102 (Tx) and receivers 104 (Rx) of optical signals. The ROADM 110 switches WDM traffic at the wavelength layer. Specifically, the ROADM 110 comprises an optical add-drop multiplexer that performs wavelength selective switching. This allows individual or multiple wavelengths carrying data channels to be added and/or dropped from a transport fiber without the need to convert the signals on all of the WDM channels to electronic signals and back again to optical signals.

Additionally, a pilot tone (PT) detector 120 can be tapped anywhere into fiber links 101, e.g., between ROADMs 110 or between a Tx 102 and corresponding Rx 104. The PT detector 120 performs power measurement and/or wavelength identification of optical signals passing through the fiber links 101 using the pilot tone modulation. In an embodiment, the PT detector 120 can be placed at various point of the fiber links (e.g., between the ROADMs 110) to detect and process the pilot tone modulations provided in the optical signals via data bias. The data bias can be added by a framer (not shown) before modulating the optical signals by an optical modulator of the transmitters 102. The details of applying and detecting this pilot tone modulation are described below.

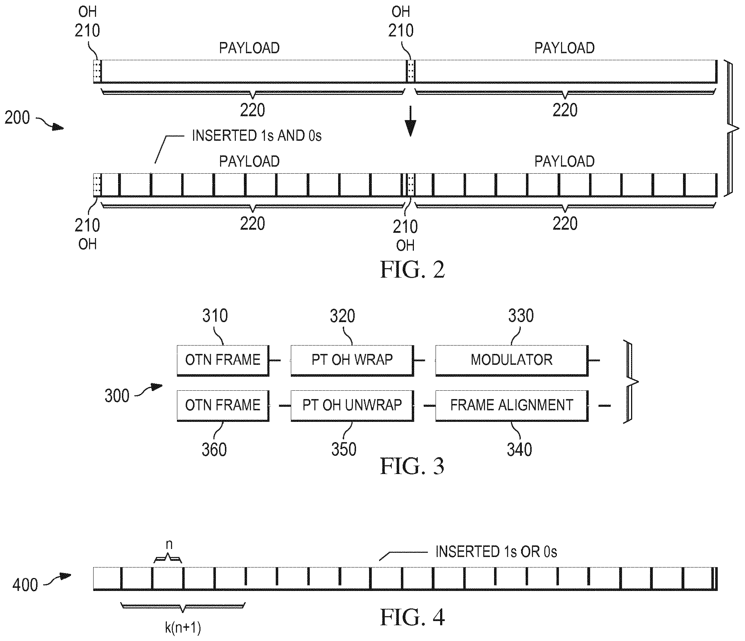

Figure 2 illustrates an embodiment of a bit pattern design 200 for pilot tone modulation by data bias, which can be used in the system 100. A transmitted data stream (by a transmitter 102) is shown before and after applying the pilot tone modulation via data bias. Before the pilot tone modulation, the data stream includes payloads 220 and optionally a header (labeled OH) 210 that precedes the payloads 220. The data stream, including payloads 220 and OH 210, is modulated (by the optical modulator of the transmitter 102) at a relatively high modulation or baud rate according to the WDM or DWDM system requirements. The data stream can be any continuous data stream, for example including Optical Transport Network (OTN)/Optical channel Transport Unit (OTU) frames. To add the pilot tone modulation in the stream, bias bits (e.g., a sequence of 1/0 bits) are inserted (e.g., by the Tx framer) in the stream at desired periodic intervals that determine the pilot tone modulation. The modulation frequency is determined by the location of the inserted bias 1/0 bits. The modulation depth is determined by the ratio of the inserted 1s/0s over the original data (in payload 220/header 210). Since the added 1s/0s for pilot tone modulation reduce the actual data rate (payload rate), over-clocking may be used to maintain the data rate.

Figure 3 illustrates an embodiment of a system 300 for pilot tone modulation by data bias. The system 300 includes functions blocks or modules at a transmitter, e.g., at the Tx 102, and corresponding functions blocks/modules at a receiver, e.g., at the Rx 104. The functions blocks/modules may be implemented using software, hardware, or both. The functions blocks/modules at the transmitter include an OTN frame function 310, a PT OH wrap function 320, and an optical modulator 330. The OTN frame function 310 configures and generates the OTN frame in the stream, including the payload and header. The PT OH wrap function 320 inserts the bias bits (e.g., 1s/0s) for pilot tone modulation as described above to the stream. The OTN frame (payload and header) is wrapped with the bias bits before being sent to drive the optical modulator 330 for modulating and sending optical signals in fiber links. The bias bits represent PT overhead inserted into fixed locations inside the OTN frame stream (within or between OTN frames) from the OTN frame function 310. For example, one PT bit is inserted after every 48 OTN bits, resulting in about 2% PT overhead. The optical modulator 330 then modulates the optical amplitude of the data for transmission.

The functions blocks/modules at the receiver include a frame alignment function 340, a PT OH unwrap function 350, and an OTN frame processing function 360. The frame alignment function 340 aligns the incoming frames properly. This includes identifying and separating each frame in the stream. The frames with PT OH comprising the bias bits are first aligned. The PT OH unwrap function 350 then removes the PT overhead (bias bits) from the frames. The location and amount of this PT overhead can vary according to implementation. The remaining payload/header is passed to the OTN frame processing function 360 for processing the actual data. The PT OH unwrap function 350 is needed in the receiver in order for the receiver to work properly (remove the bias bits). However, the detection of the bias bits for determining the pilot tone modulation is carried by a PT detector positioned anywhere suitable on fiber links (e.g., the PT detector 120).

Figure 4 illustrates an embodiment of a scheme 400 for determining a sequence of bias bits corresponding to a desired pilot tone modulation. The sequence of bias bits includes a total number of k bias bits, where k is an integer. Further, the bits within the sequence are separated by a spacing of n bits, where n is an integer. The sequence is repeated periodically in the frames (as shown) with a period equal to k x n. To keep the same data rate in the stream as prior to inserting the bias bits, the baud rate is increased from the original baud rate R to R x (n+1)/n. The modulation frequency is fₖ = R/(2kn). For example, given R=10.709GHz, n=48, and fₖ = 111.55/k MHz, the baud rate is increased by 1/48 or 2.08%, and the modulation depth is 1/48 or 2.08%. For k ranging from 100 to 200, fₖ ranges from 1.1155 MHz to 0.55776 MHz. The bias bits are used according to the scheme 400 for providing a pilot tone modulation for a given channel. Similarly, one or more additional sequence of bias bits can be used to provide one or more additional pilot tone modulations for one or more additional channels, respectively.

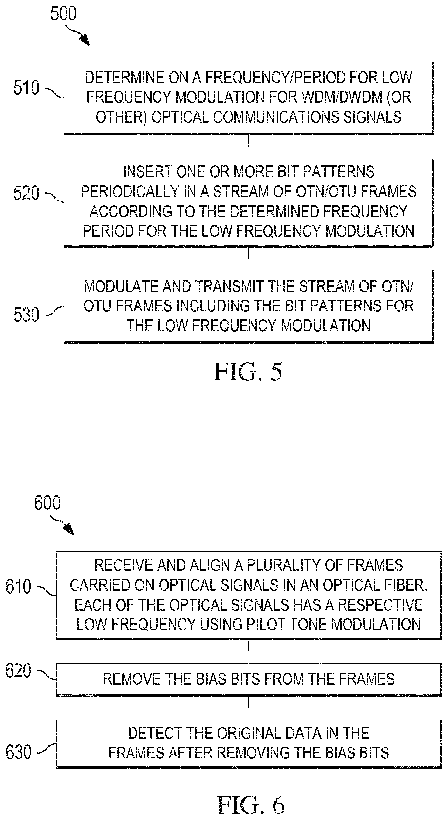

Figure 5 illustrates an embodiment of a method 500 for pilot tone modulation by data bias. The method 500 is implemented at a transmitter end. At step 510, a frequency/period for pilot tone modulation is determined for WDM/DWDM (or other) optical communications signals. At step 520, one or more bit patterns are inserted periodically in a stream of OTN/OTU frames according to the determined frequency period for the pilot tone modulation. At step 530, the stream of OTN/OTU frames including the bit patterns for the pilot tone modulation is modulated and transmitted.

Figure 6 shows an embodiment of a method 600 for receiving frames including bias bits for pilot tone modulation. The method is implemented at a receiver end. At step 610, the receiver receives and aligns a plurality of frames carried on optical signals in an optical fiber. Each of the optical signals has a respective low frequency using pilot tone modulation. Specifically, the frames include bias bits providing the pilot tone modulation. At step 620, the bias bits are removed from the frames. At step 630, the original data in the frames is detected after removing the bias bits.

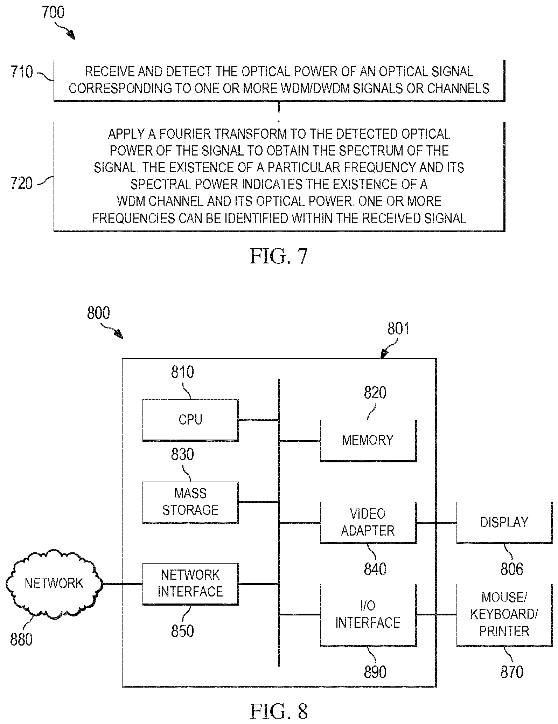

Figure 7 illustrates another embodiment of a method 700 for detecting pilot tone. The method 700 is implemented by a PT detector or the like, e.g., anywhere in the network to detect the pilot tone introduced in a channel using the method 500. At step 710, a PT detector (e.g., including a photodiode, an electric amplifier circuit, an analog-to-digital converter, and a data processor) receives and detects the optical power of an optical signal corresponding to one or more WDM/DWDM signals or channels. Each channel has a unique low frequency modulation in the form of pilot tone. At step 720, a Fourier transform is applied to the detected optical power of the signal to obtain the spectrum of the signal. The existence of a particular frequency and its spectral power indicates the existence of a WDM channel and its optical power. One or more frequencies can be identified within the received signal. The PT detection does not examine the data frames.

Figure 8 is a block diagram of an exemplary processing system 800 that can be used to implement various embodiments. The processing system is part of a communications system, such as at the central office or a network component or node (e.g., a router). The processing system 800 may comprise a processing unit 801 equipped with one or more input/output devices, such as a speaker, microphone, mouse, touchscreen, keypad, keyboard, printer, display, and the like. The processing unit 801 may include a central processing unit (CPU) 810, a memory 820, a mass storage device 830, a video adapter 840, and an Input/Output (I/O) interface 890 connected to a bus. The bus may be one or more of any type of several bus architectures including a memory bus or memory controller, a peripheral bus, a video bus, or the like.

The CPU 810 may comprise any type of electronic data processor. The memory 820 may comprise any type of system memory such as static random access memory (SRAM), dynamic random access memory (DRAM), synchronous DRAM (SDRAM), read-only memory (ROM), a combination thereof, or the like. In an embodiment, the memory 820 may include ROM for use at boot-up, and DRAM for program and data storage for use while executing programs. The mass storage device 830 may comprise any type of storage device configured to store data, programs, and other information and to make the data, programs, and other information accessible via the bus. The mass storage device 830 may comprise, for example, one or more of a solid state drive, hard disk drive, a magnetic disk drive, an optical disk drive, or the like.

The video adapter 840 and the I/O interface 890 provide interfaces to couple external input and output devices to the processing unit. As illustrated, examples of input and output devices include a display 860 coupled to the video adapter 840 and any combination of mouse/keyboard/printer 870 coupled to the I/O interface 890. Other devices may be coupled to the processing unit 801, and additional or fewer interface cards may be utilized. For example, a serial interface card (not shown) may be used to provide a serial interface for a printer.

The processing unit 801 also includes one or more network interfaces 850, which may comprise wired links, such as an Ethernet cable or the like, and/or wireless links to access nodes or one or more networks 880. The network interface 850 allows the processing unit 801 to communicate with remote units via the networks 880. For example, the network interface 850 may provide wireless communication via one or more transmitters/transmit antennas and one or more receivers/receive antennas. In an embodiment, the processing unit 801 is coupled to a local-area network or a wide-area network for data processing and communications with remote devices, such as other processing units, the Internet, remote storage facilities, or the like.

While several embodiments have been provided in the present disclosure, it should be understood that the disclosed systems and methods might be embodied in many other specific forms without departing from the scope of the present disclosure. The present examples are to be considered as illustrative and not restrictive, and the intention is not to be limited to the details given herein. For example, the various elements or components may be combined or integrated in another system or certain features may be omitted, or not implemented.

In addition, techniques, systems, subsystems, and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component whether electrically, mechanically, or otherwise. Other examples of changes, substitutions, and alterations are ascertainable by one skilled in the art and could be made without departing from the scope disclosed herein.

## Claims

1. A method (500) by a transmitter (102) for a pilot tone amplitude modulation, a low frequency modulation applied to an optical channel amplitude, the method (500) comprising:
determining (510) a periodic interval of the pilot tone amplitude modulation for tracking an optical channel;
inserting (520) a sequence of bias bits, periodically according to the determined periodic interval, in a plurality of frames comprising original data bits;
modulating (530) amplitudes of optical signals carrying the frames including the bias bits at a higher frequency than the pilot tone amplitude modulation, wherein the modulation frequency of the pilot tone amplitude modulation is determined by the location of the inserted bias 1/0 bits; and
transmitting (530), in an optical fiber (101), the optical signals including the bias bits within the frames.

2. The method (500) of claim 1 further comprising overclocking transmission of the frames including the bias bits at a higher rate than a desired baud rate for transmitting the original data bits.

3. The method (500) of claim 2, wherein the higher rate compensates for a reduction in transmission rate of original data bits due to inserting the bias bits in the frames.

4. The method (500) of claim 2 or 3, wherein the higher rate is equal to a product of the baud rate and a factor related to the periodic interval of the sequence of the bias bits.

5. The method (500) of any claim of claims 2-4, wherein the bias bits are separated by a bit-to-bit spacing equal to an integer number of bits from one bias bit sequence end to the next bias bit sequence beginning, and wherein the periodic interval of the sequence of bias bits is equal to a total number of bias bits in the sequence and the bit-to-bit spacing.

6. The method (500) of claim 5, wherein the pilot tone amplitude modulation has a frequency equal to the baud rate divided by a product of twice the total number of bias bits in the sequence and the bit-to-bit spacing.

7. A method (600) by a receiver (104) for receiving frames including bias bits for pilot tone amplitude modulation, a low frequency modulation applied to an optical channel amplitude, the method (600) comprising:
receiving (610) a plurality of frames carried on optical signals in an optical fiber (101), wherein each of the optical signals has a respective frequency according to a pilot tone amplitude modulation, and wherein the frames include bias bits providing the pilot tone amplitude modulation, wherein the bias bits have been inserted into the frames periodically according to a determined periodic interval of the pilot tone amplitude modulation for tracking an optical channel; and wherein the optical signals carrying the frames including the bias bits have a higher frequency than the pilot tone amplitude modulation, wherein the modulation frequency of the pilot tone amplitude modulation is determined by the location of the inserted bias 1/0 bits;
removing (620) the bias bits from the frames; and
detecting (630) original data bits in the frames after removing the bias bits.

8. The method (600) of claim 7, wherein the frames including the bias bits are received at a higher rate than a baud rate for the original data bits, and wherein the higher rate allows detecting the original data bits after removing the bias bits at the baud rate.

9. The method (600) of claim 8, wherein the bias bits in the frames are separated by a bit-to-bit spacing equal to an integer number of bits from one bias bit sequence end to the next bias bit sequence beginning, and wherein a periodic interval of a repeated sequence of the bias bits in the frames is equal to a total number of bias bits in the sequence and the bit-to-bit spacing.

10. The method (600) of claim 9, wherein the higher rate exceeds the baud rate by a factor proportional to the bit-to-bit spacing of the bias bits in the sequence.

11. A transmitter (102) for frequency pilot tone modulation, a low frequency modulation applied to an optical channel amplitude, the transmitter (102) comprising:
at least one processor; and
a non-transitory computer readable storage medium storing programming for execution by the at least one processor, the programming including instructions to:
determine a periodic interval for a pilot tone amplitude modulation for tracking an optical channel;
inserting a sequence of bias bits, periodically according to the determined periodic interval, in a plurality of frames comprising original data bits;
modulate amplitudes of optical signals carrying the frames including the bias bits at a higher frequency than the pilot tone amplitude modulation, the modulation frequency of the pilot tone amplitude modulation being determined by the location of the inserted bias 1/0 bits; and
transmit, in an optical fiber, the optical signals including the bias bits within the frames.

12. The transmitter (102) of claim 11, wherein the programming includes further instructions to overclock transmission of the frames including the bias bits at a higher rate than a desired baud rate for transmitting the original data bits, and wherein the higher rate compensates for a reduction in transmission rate of original data bits due to inserting the bias bits in the frames.

13. The transmitter (102) of claim 11 or 12, wherein the bias bits are separated by a bit-to-bit spacing equal to an integer number of bits from one bias bit sequence end to the next bias bit sequence beginning, and wherein the periodic interval of the sequence of bias bits is equal to a total number of bias bits in the sequence and the bit-to-bit spacing.

14. A receiver (104) for receiving frames including bias bits for pilot tone modulation, a low frequency modulation applied to an optical channel amplitude, the receiver comprising:
at least one processor; and
a non-transitory computer readable storage medium storing programming for execution by the at least one processor, the programming including instructions to:
receive a plurality of frames carried on optical signals in an optical fiber (101), wherein each of the optical signals has a respective frequency according to a pilot tone amplitude modulation, and wherein the frames include bias bits providing the pilot tone amplitude modulation; wherein the bias bits have been inserted into the frames periodically according to a determined periodic interval of the pilot tone amplitude modulation for tracking an optical channel; and wherein the optical signals carrying the frames including the bias bits have a higher frequency than the pilot tone amplitude modulation, the modulation frequency of the pilot tone amplitude modulation being determined by the location of the inserted bias 1/0 bits;
remove the bias bits from the frames; and
detect original data bits in the frames after removing the bias bits.

15. The receiver (104) of claim 14, wherein the programming includes further instructions to receive the frames, including the bias bits, at a higher rate than a baud rate for the original data bits, and wherein the higher rate allows detecting the original data bits after removing the bias bits at the baud rate.

## Patentansprüche

1. Verfahren (500) durch einen Sender (102) für eine Pilotton-Amplitudenmodulation, wobei eine Niederfrequenzmodulation auf die Amplitude eines optischen Kanals angewendet wird, wobei das Verfahren (500) Folgendes umfasst:
Bestimmen (510) eines periodischen Intervalls der Pilotton-Amplitudenmodulation zum Verfolgen eines optischen Kanals;
periodisches Einfügen (520) einer Folge von Bias-Bits gemäß dem bestimmten periodischen Intervall in eine Vielzahl von Frames, die Originaldatenbits umfassen;
Modulieren (530) von Amplituden optischer Signale, die die Frames, die die Bias-Bits beinhalten, enthalten, mit einer höheren Frequenz als die Pilotton-Amplitudenmodulation, wobei die Modulationsfrequenz der Pilotton-Amplitudenmodulation durch die Position der eingefügten Bias-1/0-Bits bestimmt wird; und
Senden (530) der optischen Signale, die die Bias-Bits beinhalten, innerhalb der Frames in einer optischen Faser (101).

2. Verfahren (500) nach Anspruch 1, ferner umfassend Übertakten der Sendung der Frames, die die Bias-Bits beinhalten, mit einer höheren Rate als einer gewünschten Baud-Rate zum Senden der Originaldatenbits.

3. Verfahren (500) nach Anspruch 2, wobei die höhere Rate eine Verringerung der Sendungsrate von Originaldatenbits aufgrund des Einfügens der Bias-Bits in die Frames ausgleicht.

4. Verfahren (500) nach Anspruch 2 oder 3, wobei die höhere Rate gleich einem Produkt aus der Baud-Rate und einem Faktor ist, der sich auf das periodische Intervall der Folge der Bias-Bits bezieht.

5. Verfahren (500) nach einem der Ansprüche 2-4, wobei die Bias-Bits durch einen Bit-zu-Bit-Abstand getrennt sind, der gleich einer ganzzahligen Anzahl von Bits von einem Bias-Bitfolgenende zu dem nächsten Bias-Bitfolgenanfang ist, und wobei das periodische Intervall der Folge von Bias-Bits gleich einer Gesamtanzahl von Bias-Bits in der Folge und dem Bit-zu-Bit-Abstand ist.

6. Verfahren (500) nach Anspruch 5, wobei die Pilotton-Amplitudenmodulation eine Frequenz aufweist, die gleich der Baud-Rate geteilt durch ein Produkt aus zweimal der Gesamtanzahl von Bias-Bits in der Folge und dem Bit-zu-Bit-Abstand ist.

7. Verfahren (600) durch einen Empfänger (104) zum Empfangen von Frames, die Bias-Bits für eine Pilotton-Amplitudenmodulation beinhalten, wobei eine Niederfrequenzmodulation auf die Amplitude eines optischen Kanals angewendet wird, wobei das Verfahren (600) Folgendes umfasst:
Empfangen (610) einer Vielzahl von Frames, die auf optischen Signalen in einer optischen Faser (101) enthalten sind, wobei jedes der optischen Signale eine jeweilige Frequenz gemäß einer Pilotton-Amplitudenmodulation aufweist und wobei die Frames Bias-Bits beinhalten, die die Pilotton-Amplitudenmodulation bereitstellen, wobei die Bias-Bits gemäß einem bestimmten periodischen Intervall der Pilotton-Amplitudenmodulation periodisch in die Frames eingefügt wurden, um einen optischen Kanal zu verfolgen; und wobei die optischen Signale, die die Frames, die die Bias-Bits beinhalten, enthalten, eine höhere Frequenz als die Pilotton-Amplitudenmodulation aufweisen, wobei die Modulationsfrequenz der Pilotton-Amplitudenmodulation durch die Position der eingefügten Bias-1/0-Bits bestimmt wird;
Entfernen (620) der Bias-Bits aus den Frames; und
Erkennen (630) der Originaldatenbits in den Frames nach dem Entfernen der Bias-Bits.

8. Verfahren (600) nach Anspruch 7, wobei die Frames, die die Bias-Bits beinhalten, mit einer höheren Rate als einer Baud-Rate für die Originaldatenbits empfangen werden und wobei die höhere Rate ein Erkennen der Originaldatenbits nach dem Entfernen der Bias-Bits mit der Baud-Rate ermöglicht.

9. Verfahren (600) nach Anspruch 8, wobei die Bias-Bits in den Frames durch einen Bit-zu-Bit-Abstand getrennt sind, der gleich einer ganzzahligen Anzahl von Bits von einem Bias-Bitfolgenende zu dem nächsten Bias-Bitfolgenanfang ist, und wobei ein periodisches Intervall einer wiederholten Folge der Bias-Bits in den Frames gleich einer Gesamtanzahl von Bias-Bits in der Folge und dem Bit-zu-Bit-Abstand ist.

10. Verfahren (600) nach Anspruch 9, wobei die höhere Rate die Baud-Rate um einen Faktor übersteigt, der proportional zu dem Bit-zu-Bit-Abstand der Bias-Bits in der Folge ist.

11. Sender (102) zur Frequenz-Pilottonmodulation, wobei eine Niederfrequenzmodulation auf die Amplitude eines optischen Kanals angewendet wird, wobei der Sender (102) Folgendes umfasst:
mindestens einen Prozessor; und
ein nicht flüchtiges computerlesbares Speichermedium, auf dem eine Programmierung zur Ausführung durch den mindestens einen Prozessor gespeichert ist, wobei die Programmierung Anweisungen zu Folgendem beinhaltet:
Bestimmen eines periodischen Intervalls für eine Pilotton-Amplitudenmodulation zum Verfolgen eines optischen Kanals;
periodisches Einfügen einer Folge von Bias-Bits gemäß dem bestimmten periodischen Intervall in eine Vielzahl von Frames, die Originaldatenbits umfassen;
Modulieren von Amplituden optischer Signale, die die Frames, die die Bias-Bits beinhalten, enthalten, mit einer höheren Frequenz als die Pilotton-Amplitudenmodulation, wobei die Modulationsfrequenz der Pilotton-Amplitudenmodulation durch die Position der eingefügten Bias-1/0-Bits bestimmt wird; und
Senden der optischen Signale, die die Bias-Bits beinhalten, innerhalb der Frames in einer optischen Faser.

12. Sender (102) nach Anspruch 11, wobei die Programmierung weitere Anweisungen zum Übertakten der Sendung der Frames, die die Bias-Bits beinhalten, mit einer höheren Rate als einer gewünschten Baud-Rate zum Senden der Originaldatenbits beinhaltet, und wobei die höhere Rate eine Verringerung der Sendungsrate von Originaldatenbits aufgrund des Einfügens der Bias-Bits in die Frames ausgleicht.

13. Sender (102) nach Anspruch 11 oder 12, wobei die Bias-Bits durch einen Bit-zu-Bit-Abstand getrennt sind, der gleich einer ganzzahligen Anzahl von Bits von einem Bias-Bitfolgenende zu dem nächsten Bias-Bitfolgenanfang ist, und wobei das periodische Intervall der Folge von Bias-Bits gleich einer Gesamtanzahl von Bias-Bits in der Folge und dem Bit-zu-Bit-Abstand ist.

14. Empfänger (104) zum Empfangen von Frames, die Bias-Bits für eine Pilottonmodulation beinhalten, wobei eine Niederfrequenzmodulation auf die Amplitude eines optischen Kanals angewendet wird, wobei der Empfänger Folgendes umfasst:
mindestens einen Prozessor; und
ein nicht flüchtiges computerlesbares Speichermedium, auf dem eine Programmierung zur Ausführung durch den mindestens einen Prozessor gespeichert ist, wobei die Programmierung Anweisungen zu Folgendem beinhaltet:
Empfangen einer Vielzahl von Frames, die auf optischen Signalen in einer optischen Faser (101) enthalten sind, wobei jedes der optischen Signale eine jeweilige Frequenz gemäß einer Pilotton-Amplitudenmodulation aufweist und wobei die Frames Bias-Bits beinhalten, die die Pilotton-Amplitudenmodulation bereitstellen; wobei die Bias-Bits gemäß einem bestimmten periodischen Intervall der Pilotton-Amplitudenmodulation periodisch in die Frames eingefügt wurden, um einen optischen Kanal zu verfolgen; und wobei die optischen Signale, die die Frames, die die Bias-Bits beinhalten, enthalten, eine höhere Frequenz als die Pilotton-Amplitudenmodulation aufweisen, wobei die Modulationsfrequenz der Pilotton-Amplitudenmodulation durch die Position der eingefügten Bias-1/0-Bits bestimmt wird;
Entfernen der Bias-Bits aus den Frames; und
Erkennen der Originaldatenbits in den Frames nach dem Entfernen der Bias-Bits.

15. Empfänger (104) nach Anspruch 14, wobei die Programmierung weitere Anweisungen umfasst, um die Frames, die die Bias-Bits beinhalten, mit einer höheren Rate als einer Baud-Rate für die Originaldatenbits zu empfangen, und wobei die höhere Rate ein Erkennen der Originaldatenbits nach dem Entfernen der Bias-Bits mit der Baud-Rate ermöglicht.

## Revendications

1. Procédé (500) par un émetteur (102) pour une modulation d'amplitude de tonalité pilote, une modulation basse fréquence appliquée à un canal optique d'amplitude, le procédé (500) comprenant :
la détermination (510) d'un intervalle périodique de la modulation d'amplitude de tonalité pilote pour suivre un canal optique ;
l'insertion (520) d'une séquence de bits de polarisation, périodiquement selon l'intervalle périodique déterminé, dans une pluralité de trames comprenant des bits de données d'origine ;
la modulation (530) d'amplitudes de signaux optiques transportant les trames comportant les bits de polarisation à une fréquence plus élevée que la modulation d'amplitude de tonalité pilote, dans lequel la fréquence de modulation de la modulation d'amplitude de tonalité pilote est déterminée par l'emplacement des bits 1/0 de polarisation insérés ; et
la transmission (530), dans une fibre optique (101), des signaux optiques comportant les bits de polarisation à l'intérieur des trames.

2. Procédé (500) selon la revendication 1, comprenant en outre le surcadençage d'une transmission des trames comportant les bits de polarisation à un débit supérieur à un débit en bauds souhaité pour transmettre les bits de données d'origine.

3. Procédé (500) selon la revendication 2, dans lequel le débit supérieur compense une réduction du débit de transmission de bits de données d'origine due à l'insertion des bits de polarisation dans les trames.

4. Procédé (500) selon la revendication 2 ou 3, dans lequel le débit supérieur est égal à un produit du débit en bauds et d'un facteur lié à l'intervalle périodique de la séquence des bits de polarisation.

5. Procédé (500) selon l'une quelconque des revendications 2 à 4, dans lequel les bits de polarisation sont séparés par un espacement bit à bit égal à un nombre entier de bits entre une fin de séquence de bits de polarisation et un début de séquence de bits de polarisation suivante, et dans lequel l'intervalle périodique de la séquence de bits de polarisation est égal à un nombre total de bits de polarisation dans la séquence et l'espacement bit à bit.

6. Procédé (500) selon la revendication 5, dans lequel la modulation d'amplitude de tonalité pilote présente une fréquence égale au débit en bauds divisé par un produit de deux fois le nombre total de bits de polarisation dans la séquence et l'espacement bit à bit.

7. Procédé (600) par un récepteur (104) de réception de trames comportant des bits de polarisation pour une modulation d'amplitude de tonalité pilote, une modulation basse fréquence appliquée à un canal optique d'amplitude, le procédé (600) comprenant :
la réception (610) d'une pluralité de trames transportées sur des signaux optiques dans une fibre optique (101), dans lequel chacun des signaux optiques présente une fréquence respective selon une modulation d'amplitude de tonalité pilote, et dans lequel les trames comportent des bits de polarisation fournissant la modulation d'amplitude de tonalité pilote, dans lequel les bits de polarisation ont été insérés dans les trames périodiquement selon un intervalle périodique déterminé de la modulation d'amplitude de tonalité pilote pour suivre un canal optique ; et dans lequel les signaux optiques transportant les trames comportant les bits de polarisation présentent une fréquence supérieure à la modulation d'amplitude de tonalité pilote, dans lequel la fréquence de modulation de la modulation d'amplitude de tonalité pilote est déterminée par l'emplacement des bits 1/0 de polarisation insérés ;
la suppression (620) des bits de polarisation des trames ; et
la détection (630) de bits de données d'origine dans les trames après suppression des bits de polarisation.

8. Procédé (600) selon la revendication 7, dans lequel les trames comportant les bits de polarisation sont reçues à un débit supérieur à un débit en bauds pour les bits de données d'origine, et dans lequel le débit supérieur permet la détection des bits de données d'origine après suppression des bits de polarisation au niveau du débit en bauds.

9. Procédé (600) selon la revendication 8, dans lequel les bits de polarisation dans les trames sont séparés par un espacement bit à bit égal à un nombre entier de bits entre une fin de séquence de bits de polarisation et un début de séquence de bits de polarisation suivante, et dans lequel un intervalle périodique d'une séquence répétée de bits de polarisation est égal à un nombre total de bits de polarisation dans la séquence et l'espacement bit à bit.

10. Procédé (600) selon la revendication 9, dans lequel le débit supérieur dépasse le débit en bauds d'un facteur proportionnel à l'espacement bit à bit des bits de polarisation dans la séquence.

11. Émetteur (102) pour la modulation de tonalité pilote de fréquence, une modulation basse fréquence appliquée à une amplitude de canal optique, l'émetteur (102) comprenant :
au moins un processeur ; et
un support de stockage non transitoire lisible par ordinateur stockant une programmation à exécuter par l'au moins un processeur, la programmation comportant des instructions pour :
déterminer un intervalle périodique pour une modulation d'amplitude de tonalité pilote pour suivre un canal optique ;
insérer une séquence de bits de polarisation, périodiquement selon l'intervalle périodique déterminé, dans une pluralité de trames comprenant des bits de données d'origine ;
moduler des amplitudes de signaux optiques transportant les trames comportant les bits de polarisation à une fréquence plus élevée que la modulation d'amplitude de tonalité pilote, la fréquence de modulation de la modulation d'amplitude de tonalité pilote étant déterminée par l'emplacement des bits 1/0 de polarisation insérés ; et
transmettre, dans une fibre optique, les signaux optiques comportant les bits de polarisation à l'intérieur des trames.

12. Émetteur (102) selon la revendication 11, dans lequel la programmation comporte d'autres instructions pour surcadencer une transmission des trames comportant les bits de polarisation à un débit supérieur à un débit en bauds souhaité pour transmettre les bits de données d'origine, et dans lequel le débit supérieur compense une réduction dans le taux de transmission de bits de données d'origine due à l'insertion des bits de polarisation dans les trames.

13. Émetteur (102) selon la revendication 11 ou 12, dans lequel les bits de polarisation sont séparés par un espacement bit à bit égal à un nombre entier de bits entre une fin de séquence de bits de polarisation et un début de séquence de bits de polarisation suivante, et dans lequel l'intervalle périodique de la séquence de bits de polarisation est égal à un nombre total de bits de polarisation dans la séquence et l'espacement bit à bit.

14. Récepteur (104) pour recevoir des trames comportant des bits de polarisation pour une modulation de tonalité pilote, une modulation basse fréquence appliquée à une amplitude de canal optique, le récepteur comprenant :
au moins un processeur ; et
un support de stockage non transitoire lisible par ordinateur stockant une programmation à exécuter par l'au moins un processeur, la programmation comportant des instructions pour :
recevoir une pluralité de trames transportées sur des signaux optiques dans une fibre optique (101), dans lequel chacun des signaux optiques présente une fréquence respective selon une modulation d'amplitude de tonalité pilote, et dans lequel les trames comportent des bits de polarisation fournissant la modulation d'amplitude de tonalité pilote ; dans lequel les bits de polarisation ont été insérés dans les trames périodiquement selon un intervalle périodique déterminé de la modulation d'amplitude de tonalité pilote pour suivre un canal optique ; et dans lequel les signaux optiques transportant les trames comportant les bits de polarisation présentent une fréquence supérieure à la modulation d'amplitude de tonalité pilote, la fréquence de modulation de la modulation d'amplitude de tonalité pilote étant déterminée par l'emplacement des bits 1/0 de polarisation insérés ;
supprimer les bits de polarisation des trames ; et
détecter des bits de données d'origine dans les trames après suppression des bits de polarisation.

15. Récepteur (104) selon la revendication 14, dans lequel la programmation comporte d'autres instructions pour recevoir les trames, y compris les bits de polarisation, à un débit supérieur à un débit en bauds pour les bits de données d'origine, et dans lequel le débit supérieur permet la détection des bits de données d'origine après suppression des bits de polarisation au niveau du débit en bauds.
